# EUROPÄISCHE PATENTSCHRIFT

(11) **EP 1 025 367 B1**
(45) Veröffentlichungstag und Bekanntmachung des Hinweises auf die Patenterteilung: **16.06.2004**
(21) Anmeldenummer: 98955437.3
(22) Anmeldetag: 12.10.1998
(51) Int. Cl.: F15C 5/00, F16L 41/10

(54) **KUPPLUNG FÜR MIKROKOMPONENTEN**
COUPLING FOR MICROCOMPONENTS
ACCOUPLEMENT POUR MICROCONSTITUANTS

(30) Priorität: 22.10.1997 DE 19746585
(43) Veröffentlichungstag der Anmeldung: 09.08.2000
(73) Patentinhaber: MERCK PATENT GmbH, 64293 Darmstadt (DE)
(72) Erfinder: BRENNER, Günter, D-64347 Griesheim (DE); SCHMELZ, Michael, D-65830 Kriftel (DE); WURZIGER, Hanns, D-64291 Darmstadt (DE); SCHWESINGER, Norbert, D-98693 Ilmenau (DE)
(86) Internationale Anmeldenummer: PCT/EP1998/006464
(87) Internationale Veröffentlichungsnummer: WO 1999/020906

(56) Entgegenhaltungen:
- EP-A- 0 092 779
- EP-A- 0 117 381
- EP-A- 0 189 940
- WO-A-96/28664
- DE-A- 4 101 575

## Beschreibung

Die Erfindung betrifft eine Kupplung für den Anscluß von Mikrokomponenten an fluidischen Leitungen, wie Mikromischer, Mikropumpen, Mikroventilen u. ähnlichen, bestehend aus mehreren, im wesentlichen planparallelen Platten, mit Leitungsanschlüssen zur Zuleitung der zu fördemden oder mischenden Komponenten und zur Ableitung der Fluide.

Viele chemische Reaktionen erfordem eine exakte Temperaturkontrolle und eine gute Durchmischung der zu mischenden Komponenten. Zudem gewinnt zunehmend die Prozeßkontrolle an Bedeutung; die geforderte erhöhte Sicherheit kann durch geringere Massenströme einfacher gewährleistet werden. Mikrokomponenten unterschiedlichster Bauart können diese Anforderungen erfüllen.

Die Erfindung beschäftigt sich mit einem Kupplungselement für Mikrokomponenten, die mehrere aufeinanderliegende planparallele Platten in ihren aufeinanderliegenden Oberflächen die für die erforderliche Funktion Mischergeometrie benötigten Strukturen enthalten. Wegen der guten thermischen Leitfähigkeit und der Strukturierbarkeit bestehen diese Platten üblicherweise aus Silizium (sog. Siliziumwafer), die im Inneren eine der Funktion der Mikrokomponente angepaßte Geometrie enthalten. Der Einsatz anderer, chemisch beständiger und den Einsatzbedingungen angepaßter Materialien, ist aber auch möglich.

Wegen der eingeschränkten mechanischen Festigkeit des Siliziums müssen Zug- und Biegebeanspruchungen der Platten soweit wie möglich vermieden werden. Schwierigkeiten bereitet jedoch die Anbringung der Leitungsanschlüsse zur Zuleitung der zu mischenden oder fördemden Komponenten und zur Ableitung. Einerseits muß eine genaue Positionierung in Bezug auf die aus der Plattenoberfläche austretenden Bohrungen gewährleistet sein; andererseits besteht die Gefahr, daß bei der Anbringung der Leitungsanschlüsse oder bei der Montage bzw. Demontage des Mikrokomponenten über diese Leitungsanschlüsse unzulässige Biegebeanspruchungen in die Platten, insbesondere Siliziumplatten, eingeleitet werden.

Aufgabe der Erfindung ist es daher, eine Kupplung für Mikrokomponenten der eingangs genannten Gattung so auszugestalten, daß die Leitungsanschlüsse zuverlässig an den Platten angebracht werden können und dabei eine unzulässige Beanspruchung der Platten verhindert wird.

Diese Aufgabe wird erfindungsgemäß dadurch gelöst, daß die Platten deckungsgleiche Durchbrüche aufweisen, daß ein mit den Leitungsanschlüssen versehener Anschlußblock mehrere, durch die Durchbrüche und eine Druckplatte ragende Befestigungsstege aufweist, die an der Rückseite der Druckplatte mit einer Befestigungseinrichtung verbunden sind, und daß der Anschlußblock in seiner den Platten zugekehrten Anlagefläche Leitungsmündungen aufweist, denen jeweils eine Leitungsbohrung der obersten Platte gegenüberliegt.

Die Anordnung der Leitungsanschlüsse an dem Anschlußblock verhindert, daß durch diese Leitungsanschlüsse Kräfte auf die Platten übertragen werden, die zu unzulässigen Beanspruchungen führen würden. Alle Leitungsanschlüsse sind über den Anschlußblock und die gegenüberliegende Druckplatte so mit den Platten verbunden, daß Biegebeanspruchungen weitestgehend vermieden werden.

Die durch die Anordnung der Leitungsanschlüsse am Anschlußblock gewährleistete genaue räumliche Zuordnung zu den Befestigungsstegen stellt auch eine genaue Ausrichtung zu den Leitungsmündungen in der Platte sicher. Diese genaue und reproduzierbare Positionierung der Leitungsanschlüsse ist auch nach jeder Demontage und erneuten Montage der Mikrokomponente gewährleistet.

Vorzugsweise liegen die Leitungsbohrungen in der Plattenoberfläche zwischen den Durchbrüchen. Damit wird sowohl eine kompakte Bauweise als auch gleichmäßige Abstützung der im Bereich der Leitungsanschlüsse auftretenden Druckkräfte über die Befestigungsstege erreicht, die durch die Durchbrüche ragen.

Gemäß einer bevorzugten Ausführungsform der Erfindung ist vorgesehen, daß jede Leitungsmündung des Anschlußblocks von einem elastischen Dichtring umgeben ist. Damit wird ein dichter Anschluß der jeweiligen Leitung erreicht.

Besonders vorteilhaft ist es, wenn jeder Leitungsanschluß eine zur Leitungsmündung führende Gewindebohrung aufweist und der Dichtring zwischen der Oberfläche der Platte und einer Stimfläche eines in die Gewindebohrung eingeschraubten Anschlußverbindungsteils liegt.

Beim Einschrauben des Anschlußverbindungsteils wird der elastische Dichtring gegen die Plattenoberfläche gedrückt. Dadurch entsteht eine dichte Verbindung. Auf die Plattenoberfläche wirken dabei nur Druckkräfte, die keine Gefahr darstellen. Der eingelegte elastische Dichtring dient gleichzeitig als Dicht- und Federelement, das ein kontrolliertes Anziehen des Anschlußverbindungsteils ermöglicht.

Nachfolgend wird ein Ausführungsbeispiel der Erfindung näher beschrieben, das in der Zeichnung dargestellt ist. Es zeigt:

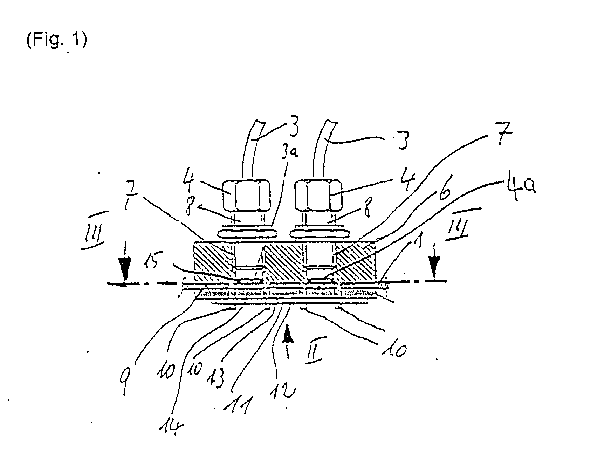

Fig. 1 einen Teil einer Mikrokomponente in einem Schnitt im Bereich der Leitungsanschlüsse,

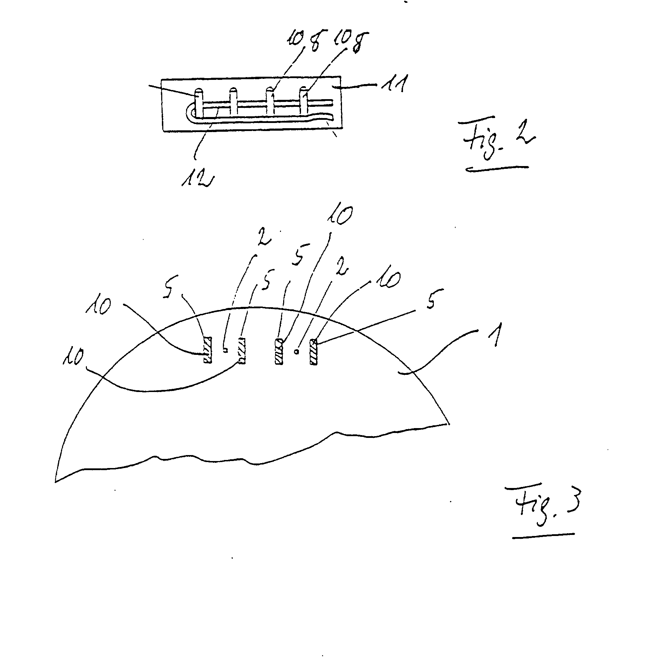

Fig. 2 eine Unteransicht in Richtung des Pfeiles II in Fig. 1 und
Fig. 3 einen Schnitt längs der Linie III-III in Fig. 1.

Die dargestellte Mikrokomponente weist mehrere aufeinanderliegende, im wesentlichen planparallele Platten 1 auf, von denen in der Zeichnung nur eine dargestellt ist. Es handelt sich hierbei um sog. Siliziumwafer mit (nicht dargestellter) eingeätzter Geometrie. Aus der Oberfläche der Platte 1 treten Leitungsbohrungen 2 aus, an die Leitungen 3 über Leitungsanschlüsse 4 angeschlossen sind, die zu Leitungsmündungen 4a führen.

In den aufeinanderliegenden Platten 1 sind deckungsgleiche Durchbrüche 5 ausgespart, zwischen denen die Leitungsbohrungen 2 liegen. Die Lage der Leitungsbohrungen 2 ist in bezug auf die Durchbrüche 5 genau definiert.

Ein im wesentlichen quaderförmiger Anschlußblock 6 enthält Gewindebohrungen 7, in die jeweils eine handelsübliche Mikroverschraubung 8 jedes Leitungsanschlusses 4 eingeschraubt ist.

Aus der der Oberfläche der Platte 5 zugekehrten Anlagefläche 9 des Anschlußblocks 6 springen vier Befestigungsstege 10 vor, die durch die Durchbrüche 5 und eine Druckplatte 11 ragen, die an der Rückseite der Platte 1 angeordnet ist.

Eine gemeinsame Befestigungseinrichtung, die die beschriebenen Bauteile in diese Lage hält, besteht beim dargestellten Ausführungsbeispiel aus einer Klemmspange 12, die durch Querbohrungen 13 aller Befestigungsstege 10 gesteckt ist.

Zwischen jeder Stirnfläche 14 des eingeschraubten Anschlußverbindungsteils der Mikroverschraubung 8 und der Plattenoberfläche der Platte 1 ist jeweils ein elastischer Dichtring 15, bspw. ein O-Ring eingelegt. Beim Einschrauben der Mikroverschraubungen 8 in den Anschlußblock 6 entsteht somit ein dichter Anschluß an die Leitungsbohrungen 2. Der elastische Dichtring dient dabei zugleich auch als ein Federelement, daß ein kontrolliertes Anziehen der Verbindung ermöglicht.

## Patentansprüche

1. Kupplung für den Anschluß von Mikrokomponenten an fluidischen Leitungen, bestehend aus mehreren, im wesentlichen planparallelen Platten, mit Leitungsanschlüssen (4) zur Zuleitung flüssiger oder gasförmiger Komponenten und zu deren Ableitung, **dadurch gekennzeichnet, daß** die Platten (1) deckungsgleiche Durchbrüche (5) aufweisen, daß ein mit den Leitungsanschlüssen (4) versehener Anschlußblock (6) mehrere, durch die Durchbrüche (5) und eine Druckplatte (11) ragende Befestigungsstege (10) aufweist, die an der Rückseite der Druckplatte (11) mit einer Befestigungseinrichtung (12) verbunden sind, und daß der Anschlußblock (6) in seiner den Platten (1) zugekehrten Anlagefläche (9) Leitungsmündungen (4a) aufweist, denen jeweils eine Leitungsbohrung (2) der obersten Platte (1) gegenüberliegt.

2. Kupplung für Mikrokomponenten nach Anspruch 1, **dadurch gekennzeichnet, daß** die Leitungsbohrungen (2) in der Plattenoberfläche zwischen den Durchbrüchen (5) liegen.

3. Kupplung für Mikrokomponenten nach Anspruch 1, **dadurch gekennzeichnet, daß** jede Leitungsmündung (3a) des Anschlußblocks (6) von einem elastischen Dichtring (15) umgeben ist.

4. Kupplung für Mikrokomponenten nach Anspruch 3, **dadurch gekennzeichnet, daß** jeder Leitungsanschluß (4) eine zur Leitungsmündung (4a) führende Gewindebohrung (7) aufweist und daß der Dichtring (15) zwischen der Oberfläche der obersten Platte (1) und einer Stirnfläche (14) eines in die Gewindebohrung (7) eingeschraubten Anschlußverschraubungsteils liegt.

## Claims

1. Coupling for the connection of microcomponents to fluid lines, comprising a plurality of substantially plane-parallel plates, with line connections (4) for the supply of liquid or gaseous components and for their removal, **characterized in that** the plates (1) have congruent apertures (5), **in that** a connection block (6), which is provided with the line connections (4), has a plurality of attachment webs (10) which project through the apertures (5) and a pressure plate (11) and, on the rear side of the pressure plate (11), are connected to an attachment device (12), and **in that** the connection block (6), in its bearing surface (9) facing towards the plates (1), has line openings (4a), opposite each of which there is a line hole (2) in the top plate (1).

2. Coupling for microcomponents according to Claim 1, **characterized in that** the line holes (2) lie in the plate surface between the apertures (5).

3. Coupling for microcomponents according to Claim 1, **characterized in that** each line opening (3a) of the connection block (6) is surrounded by an elastic sealing ring (15).

4. Coupling for microcomponents according to Claim 3, **characterized in that** each line connection (4) has a threaded hole (7) leading to the line opening (4a), and **in that** the sealing ring (15) lies between the surface of the top plate (1) and an end face (14) of a screw line connection which has been screwed into the threaded hole (7).

## Revendications

1. Accouplement pour le raccordement de microconstituants à des conduites fluidiques, composé de plusieurs plaques à faces sensiblement parallèles, avec des raccordements de conduites (4) pour l'amenée de composants liquides ou gàzeux et leur dérivation, **caractérisé en ce que** les plaques (1) comportent des percements coïncidant (5), **en ce qu'**un bloc de raccordement (6) muni de raccordements de conduites (4) comporte plusieurs barrettes de fixation (10) en saillie à travers les percements (5) et une plaque d'appui (11), qui sont reliées, au niveau de la face arrière de la plaque d'appui (11), à un dispositif de fixation (12) et **en ce que** le bloc de raccordement (6) comporte, dans sa face de montage (9) tournée vers les plaques (1), des ouvertures de conduites (4a), dont un orifice de conduite (2) fait respectivement face à la plaque supérieure (1).

2. Accouplement pour microconstituants selon la revendication 1, **caractérisé en ce que** les orifices de conduites (2) sont situés dans la surface de la plaque entre les percements (5).

3. Accouplement pour microconstituants selon la revendication 1, **caractérisé en ce que** chaque ouverture de conduite (3a) du bloc de raccordement (6) est revêtue d'une bague d'étanchéité élastique (15).

4. Accouplement pour microconstituants selon la revendication 3, **caractérisé en ce que** chaque raccordement de conduite (4) comporte un trou taraudé (7) menant à l'ouverture de conduite (4a) et **en ce que** la bague d'étanchéité (15) se trouve entre la surface de la plaque supérieure (1) et une face frontale (14) d'un élément de vissage du raccordement vissé dans le trou taraudé (7).
